(19) Europäisches Patentamt

European Patent Office

Office européen des brevets

(11) Publication number: 0 454 432 B1

# EUROPEAN PATENT SPECIFICATION

(45) Date of publication of patent specification: 28.06.95   (51) Int. Cl.⁶: B60C 9/22

(21) Application number: 91303671.1

(22) Date of filing: 24.04.91

(54) **Radial tyre.**

(30) Priority: 26.04.90 JP 112120/90

(43) Date of publication of application:
30.10.91 Bulletin 91/44

(45) Publication of the grant of the patent:
28.06.95 Bulletin 95/26

(84) Designated Contracting States:
DE FR GB

(56) References cited:
EP-A- 0 335 588        EP-A- 0 353 659
WO-A-80/00069       FR-A- 1 468 554
US-A- 4 216 813        US-A- 4 262 726

(73) Proprietor: SUMITOMO RUBBER INDUSTRIES
LIMITED
1-1 Tsutsuicho 1-chome
Chuo-ku
Kobe-shi
Hyogo-ken (JP)

(72) Inventor: Kawamura, Kazuhiko
3-16 Higashi Asagirigaoka
Akashi-shi,
Hyogo (JP)
Inventor: Sugihara, Hideaki
2-1-918 Motoyama-cho 6-chome,
Higashinada-ku
Kobe-shi,
Hyogo (JP)

(74) Representative: Stewart, Charles Geoffrey
SP TYRES UK LIMITED
Technical Division
Fort Dunlop,
Erdington,
Birmingham B24 9OT (GB)

**Description**

The present invention relates to a radial tyre, more specifically to radial tyres that are reduced in weight and which yet retain their inherent performance characteristics including steering stability and high-speed durability.

In order to enhance their inherent performance characteristics including good wear resistance, high-speed durability, steering stability and good fuel economy, most conventional radial tyres use "steel breakers" or breakers composed of steel cords. With the recent improvement in the high-speed performance of automobiles, a class of radial tyres have been introduced that use a band having nylon cords aligned radially outwardly of the steel breaker and substantially parallel to the circumferential direction of the tyre. Such radial tyres obtain a strong "hoop" or binding effect by the steel breaker so as to insure their inherent performance characteristics mentioned above and the band of nylon cords inhibits out-of-plane deformations that would otherwise occur in the breaker during high-speed running and, in particular, distortion of the breaker cord edge is reduced to still further improve the high-speed durability of the tyre.

EP-A-0335588 discloses a radial tyre, having a steel cord breaker and a band comprising a hybrid cord of a low elastic modulus filament and a high elastic modulus filament, which has improved durability at high speed and may be successfully vulcanised in a mould.

On the other hand, the tyre weight needs to continually be reduced in order to further improve the high-speed performance of automobiles. Although steel breakers impart a strong "hoop" effect to tyres, they also increase tyre weight. Aromatic polyamide fibres are available as cord materials that realise weight reduction while exhibiting a strength comparable to steel cords. It has been proposed in JP-A-63-64801, JP-A-63-141803, JP-A-64-1607 and JP-A-2-204103 (the term "JP-A" as used herein means an unexamined published Japanese patent application, that aromatic polyamide fibres be applied as breakers and other tyre reinforcements. However, aromatic polyamide fibre cords have low compressive stiffness (rigidity) and breakers that use them exhibit insufficient stiffness to prevent deterioration in high-speed durability. The low stiffness of such breakers also leads to poor steering stability.

EP-A-0320290 proposes to apply a belt containing cords of nylon 6,6 to heavy duty high pressure tyres such as an aircraft tyre.

The present inventors constructed a tyre in which a band of nylon cords was laid on a breaker made of aromatic polyamide fibre cords with a view to compensating for the defects of the latter. The results of tests conducted on the tyre showed that the thermal shrinkage of the nylon cord as it combined with the insufficient compressive stiffness of the breaker made of aromatic polyamide fibre cords caused substantial dimensional changes to produce increased distortion, which eventually led to tyre-groove cracking (hereinafter referred to as "TGC"), or small cracks appearing in the rubber at the bottom of treated grooves. That is, specifically, the heat generated during the curing or vulcanisation process caused shrinkage of the nylon cords in the band that were aligned substantially parallel to the circumferential direction of the tyre. If the breaker were made of steel cords, their high compressive stiffness would prevent substantial dimensional changes. However, aromatic polyamide cords having low compressive stiffness are unable to withstand the compressive force of the nylon band cords, and the overall outer dimensions of the tyre thus decreases. If this shrunk tyre is mounted on a wheel rim, inflated with a predetermined pressure and allowed to rotate, the outer dimensions of the tyre will increase to generate distortions in various parts of it. These distortions are particularly significant at the bottom of the tread grooves of the tyre and will eventually lead to TGC after prolonged running.

An object of the present invention is to provide a radial tyre that is lighter in weight and which yet retains the inherent performance of radial tyres including steering stability and high-speed durability.

According to one aspect of the present invention a radial tyre comprises a carcass layer having a plurality of cords aligned in a substantially radial direction that extend from the tread portion through a sidewall portion to the bead core in each of a pair of bead portions around which it is folded or turned up from the inside to the outside of the tyre and fixed in position, a breaker positioned radially outwardly of said carcass layer, and a band positioned radially outwards of said breaker and radially inwards of the annular tread, characterised in that the breaker comprises at least two cut breaker plies of cords comprising aromatic polyamide fibre, wholly aromatic polyester fibre, polyvinyl alcohol fibre having a strength of at least 15 g/d, carbon fibre or glass fibre, each cord forming an angle of from 10 to 30 degrees to the circumferential direction of the tyre, and the cords, in each breaker ply being positioned to cross the cords in an adjacent ply, and the band comprises a ribbon of one or more composite cords aligned parallel to one another wound in a continuous spiral form, said composite cords having a strength of not more than 2.5 g/d at 3% extension and an extension of not more than 8% upon application of a load (strenght) of 6 g/d, and being prepared by twisting high-modulus filaments and low-modulus filaments into two cords which then are

2

back-twisted together, and each of said cords forming an angle of 0 to 3 degrees with the circumferential direction of the tyre.

Further aspects of the invention will be apparent from the following description, by way of example only, in conjunction with the attached diagrammatic drawings in which:-

Figure 1 shows in partial cross section an example of the radial tyre of the present invention; and

Figures 2 to 4 are diagrams showing the structural relationship between the breaker and the band in test tyres fabricated in accordance with the present invention.

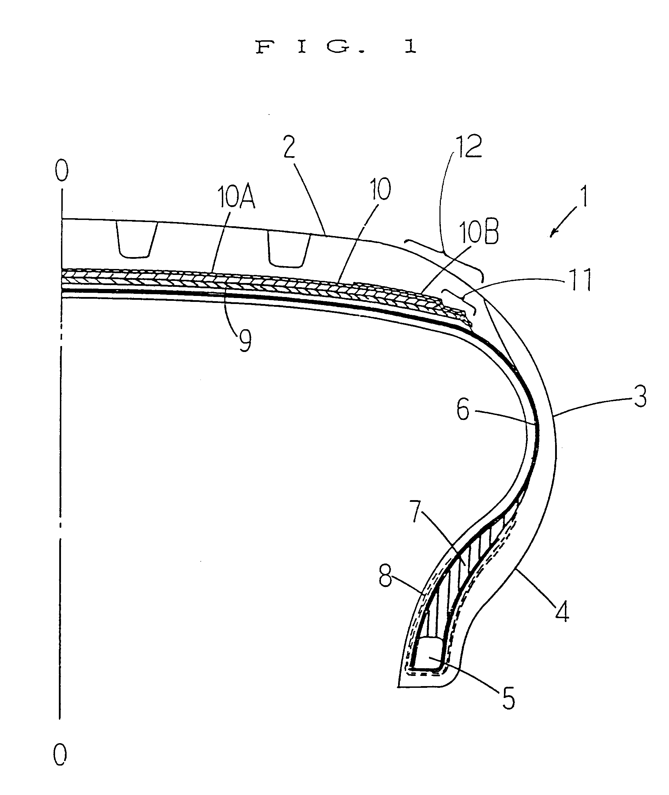

In Figure 1, a tyre 1 has a carcass layer 6 which extends from the tread portion 2 via the sidewall portion 3 to the bead core 5 in each of a pair of bead portions 4 around which it is folded or turned up from the inside to the outside of the tyre. The carcass layer 6 is composed of one or more plies in which cords are aligned parallel to one another. The cords in the carcass comprise polyester, nylon, rayon, aromatic polyamide or steel. Figure 1 shows a carcass layer composed of a singly ply. If desired, a plurality of plies may be turned up around the bead core, or alternatively, one or more plies may be turned down around the bead cores from the outside of the bead core in the axial direction of the tyre to the inside thereof in the radial direction of the tyre.

The cords in the carcass layer form a substantially radial structure in which the cords are aligned substantially perpendicular to the equatorial plane 0-0 of the tyre.

Radially outward of the bead core 5 is positioned a bead apex 7 which is made of comparatively hard rubber having a JISA hardness of from 60 to 90 and which is tapered in a triangular cross-sectional shape. The bead apex 7 serves to stabilise the turn-up of the carcass 6 and its other parts by filling the space formed therebetween. The bead apex 7 also enhances the stiffness of the bead portion 4 to improve the steering stability of the tyre. A bead reinforcing layer 8 is provided in such a way that it covers both the outside and the inside of the carcass 6 in the bead portion 4 in the axial direction of the tyre, whereby the stiffness of the bead portion 4 is enhanced to improve not only the steering stability of the tyre but also the structural durability of the bead portion 4.

A breaker 9 is provided radially outwards of the carcass layer 6. Figure 1 shows the case where the breaker 9 is composed of two plies. Each ply contains a plurality of parallel cords that are inclined at a relatively small angle (10-30 degrees) with respect to the circumferential direction of the tyre. The cords in the two plies are arranged in such a way that the cords in one ply cross those in the other ply. These cords are formed from aromatic polyamide fibre, wholly aromatic polyester fibre, polyvinyl alcohol fibre having a strength of at least 15 g/d, carbon fibre or glass fibre.

The cords in each ply form a so-called "cut breaker structure" in which individual cords are cut at both ends to have the ends of successive cords aligned in the circumferential direction at the edges of the breaker.

Organic fibre cords formed from aromatic polyamide fibre, wholly aromatic polyester fibre or polyvinyl alcohol fibre having a strength of at least 15 g/d, as well as carbon fibre cords or glass fibre cords have tensile moduli comparable to steel cords and maintain the tyre stiffness in the circumferential direction, thereby exhibiting a satisfactory "hoop" effect in association with tension in the circumferential direction. Furthermore, these fibre cords are lighter than steel cords and hence contribute to the reduction in the tyre weight. When aromatic polyamide fibre, wholly aromatic polyester fibre or polyvinyl alcohol fibre having a strength of at least 15 g/d are used as cord materials, they preferably satisfy the requirement that the coefficient of twist (NT), as expressed by the following equation, be within the range of from 0.35 to 0.60 (more preferably from 01.35 to 0.50);

$$NT = N \times (0.139 \times D/\rho)^{0.5} \times 10^{-3}$$

where N is the number of twists per 10cm, D is one half of the total denier of the cords, and $\rho$ is the specific gravity of the fibres. If NT is less than 0.35, the extension required in the curing step cannot be insured, whereas if NT exceeds 0.60, the "hoop" effect of the cord is too small.

A band 10 is provided radially outwards of the breaker 9. As shown in Figure 1, the band 10 consists of a central single-ply portion 10A and a second or two-ply portion 10B on either side. When the tyre 1 is rolling at a high speed, for example, 200 - 300 km/h, the centrifugal force produced by the mass of the tread 2 increases the outside diameter of the tyre. This change in the outside diameter of the tyre is increased in the edge portions 11 of the breaker and causes "lifting", or a phenomenon in which the tyre behaves in such a way that its shoulder portion 12 makes a relative movement radially outwards of the tyre. As a result, the breaker experiences increased distortion at the edges, which can result in damage at the edges of the breaker. In order to prevent this problem associated with "lifting", the band on both lateral sides 10B is composed of two plies.

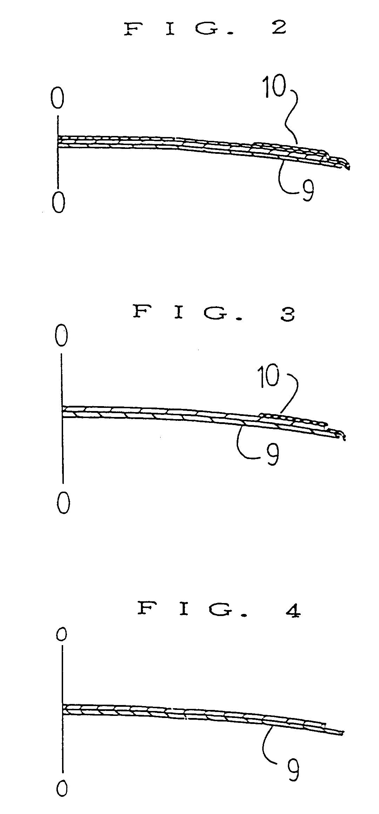

The band 10 may take other constructions, an example of which comprises only a band portion on either side (without providing a central portion) as shown in Figure 3. Alternatively, the band may be a single- or a double-ply structure that uniformly covers the breaker from one edge to the other (this alternative case is not shown).

The cords in the band 10 must have a strength of not more than 2.5 g/d at 3% extension. In the process of tyre production, all the necessary components are assembled together and processed into a "green casing", which is then cured or vulcanised in a mould in a curing machine. The mould has a larger inside diameter than the outside diameter of the green casing, which is pressed against the inner surfaces of the mould by means of air or steam pressure, whereupon the circumference of the green casing increases by a factor (the inside diameter of the mould/the outside diameter of the green case - 1) x 100 (%). This factor is typically about 3%. If the strength of the cords in the band 10 exceeds 2.5 g/d at 3% extension, the diameter of the green casing is not smoothly increased in the curing operation or step, causing non-uniformity in the tyre. Preferably, the strength of the cords in the band 10 at 3% extension is set between 1 g/d and 2.5 g/d since cords having a strength of less than 1 g/d at 3% extension are difficult to produce.

The cords in the band 10 must have an extension of not more than 8% upon application of a load (strenght) of 6 g/d. When a tyre mounted on a vehicle of interest is allowed to roll at high speed, a certain modulus is necessary in the circumferential direction of the tyre. If the extension of the cords in the band 10 having a strength of 6 g/d exceeds 8%, insufficient "hoop" effect is provided by the band for high-speed running. Preferably, the extension of the cords in the band 10 upon application of a load (strength) of 6 g/d is from 4% to 8% since cords having an extension of less than 4% are difficult to produce. More preferably, the extension as defined above is from 4% to 6.5%.

The above-described characteristics of the cords in the band 10 can be obtained by a process that comprises twisting high-modulus and low-modulus filaments into two cords and back-twisting them together into a composite cord. The high-modulus filaments may advantageously be formed from an aromatic polyamide whereas the low-modulus filaments may advantageously be formed from nylon 66. The resulting composite cord has its heat shrinking property sufficiently reduced to achieve effective prevention of TGC that would otherwise occur on account of the dimensional changes in the tyre as described hereinabove.

The band 10 is formed by preparing a ribbon in which one or more organic fibre cords having the characteristics described above are aligned parallel to one another and winding this ribbon in a continuous spiral form. This structure has the advantage of eliminating the need to provide a joint of the band, whereby the occurrence of damage or non-uniformity that would otherwise start at the band joint can be prevented. Since the individual cords in the band 10 are wound in a continuous spiral form, they are inclined at small angles of from 0 to 3 degrees with the circumferential direction of the tyre. Further, as already mentioned, the cords in the breaker 9 are inclined at angles of from 10 to 30 degrees with the circumferential direction of the tyre whereas the cords in the respective plies of the breaker cross one another. In co-operation with these breaker cords, the cords in the band 10 positioned radially outwards of the breaker 9 which are inclined at small angles of from 0 to 3 degrees with the circumferential direction form triangular truss structures. As a result, the breaker/band composite has an in-plane bending stiffness that is sufficiently increased to compensate for the lack of compressive stiffness due to the use of the breaker which is composed of organic fibre cords formed from aromatic polyamide fibre, wholly aromatic polyester fibre or polyvinyl alcohol fibre having a strength of at least 15 g/d, or carbon fibre cords or glass fibre cords, whereby the possible deterioration in tyre performance including structural durability and steering stability can be avoided.

The following example are provided for the purpose of further illustrating the present invention but are in no way to be taken as limiting.

Seven tyre samples were prepared according to the specifications described in Table 1 and in Figures 2-4. These samples were subjected to various tests and the results are also shown in Table 1.

The tyres produced in Examples 1 and 2 in accordance with the present invention were lighter than the samples produced in Comparative Examples 1-5 and yet they maintained satisfactory levels of performance, i.e. high-speed performance, dimensional changes indicative of resistance to TGC, steering stability, ride, and rolling resistance.

The respective tests were performed or evaluated by the following methods.

A test for "high-speed durability" was performed with the speed being stepped up by increments of 10 km/h under the conditions defined in ECE 30 until damage occurred in each tyre. The results are shown in Table 1 in terms of the difference from the damage level of the tyre of Comparative Example 2 which was assigned the value zero (therefore, "+20" indicates a level 20 km/h higher than that of Comparative Example 2).

4

The results of a test for "dimensional changes" indicate the percentage of the change in the outside diameter of each tyre that occurred when an inflation pressure (i.e. an internal pressure) was raised from 0.1 $kg/cm^2$ to 2.0 $kg/cm^2$.

"Steering stability" and "ride" were evaluated by outdoor-track tests with each tyre mounted on a 2,000cc Japanese passenger car and the results of subjective evaluation by the driver were rated on a 5-score basis (practical level: 3 or more).

"Rolling resistance" was tested with an indoor roadwheel and the results were evaluated by an index, with the value of rolling resistance at a speed of 80 km/h for the tyre of Comparative Example 2 being taken as 100.

A test for "resistance to flatspotting" was conducted by mounting each tyre on a standard rim, inflating it with a standard pressure, permitting it to roll on an indoor roadwheel at a speed of 60 km/h for 30 min, leaving the tyre to stand for 24hrs under load, and again permitting it to roll on the indoor roadwheel. To evaluate the test results, the peak-to-peak value of the measured force variations (FV) was read off and expressed by an index, with the value for the tyre of Comparative Example 2 being taken as 100. The smaller the index, the better the resistance to flatspotting.

In accordance with the present invention, a radial tyre can be produced that is lighter in weight and that yet retains the inherent good performance of radial tyres with respect to high-speed durability, resistance to TGC, steering stability, ride, and rolling resistance.

While the invention has been described in detail and with reference to specific examples thereof, it will be apparent to one skilled in the art that various changes and modifications can be made therein without departing from the scope of the appended claims.

EP 0 454 432 B1

## Table 1

| | Example 1 | Example 2 | Comp. Example 1 | Comp. Example 2 | Comp. Example 3 | Comp. Example 4 | Comp. Example 5 |
|---|---|---|---|---|---|---|---|
| Tire size | 215/50 VR 15 | | | | | | |
| Band structure | Fig. 2 | Fig. 3 | Fig. 4 | Fig. 2 | Fig. 2 | Fig. 4 | Fig. 2 |
| Material of cords in the breaker | aromatic polyamide 1500 d/2 | aromatic polyamide 1500 d/2 | steel | steel | steel | aromatic polyamide 1500 d/2 | aromatic polyamide 1500 d/2 |
| Material of cords in the band | composite cord* | composite cord* | – | nylon 840 d/2 | composite cord* | – | nylon 840 d/2 |
| No. of picks in the cords in the band (1/5 cm) | 50 | 50 | – | 50 | 50 | – | 50 |
| Angle of cords in the breaker (deg.) | 20 | 20 | 24 | 24 | 24 | 20 | 20 |
| No. of picks in the cords in the breaker (1/5 cm) | 42 | 42 | 36 | 36 | 36 | 42 | 42 |

*Composite cord consisted of aromatic polyamide fibers (1000 d) and nylon (840 d)

Table 1 (Cont'd)

| | Example 1 | Example 2 | Comp. Example 1 | Comp. Example 2 | Comp. Example 3 | Comp. Example 4 | Comp. Example 5 |
|---|---|---|---|---|---|---|---|
| High-speed durability | +20 | +10 | -20 | 0 | +20 | -30 | 0 |
| Dimensional changes (%) | 0.5 | 0.3 | 0.3 | 0.3 | 0.3 | 0.3 | 1.8 |
| Tire weight (kg) | 9.9 | 9.7 | 10.7 | 11.0 | 11.0 | 9.6 | 9.9 |
| Steering stability | 3 | 3 | 2 | 3 | 3.5 | 2 | 2.5 |
| Ride | 3.5 | 3.5 | 3 | 3 | 3 | 3.5 | 3.5 |
| Rolling resistance | 94 | 92 | 98 | 100 | 99 | 99 | 96 |
| Resistance to flatspotting | 100 | 100 | 100 | 104 | 100 | 100 | 106 |

## Claims

1. A radial tyre comprising a carcass layer (6) having a plurality of cords aligned in a substantially radial direction that extend from the tread portion (2) through a sidewall portion (3) to the bead core (5) in

7

each of a pair of bead portions (4) around which it is folded or turned up from the inside to the outside of the tyre and fixed in position, a breaker (9) positioned radially outwardly of said carcass layer (6), and a band (10) positioned radially outwards of said breaker (9) and radially inwards of the annular tread (2), characterised in that the breaker (9) comprises at least two cut breaker plies of cords comprising aromatic polyamide fibre, wholly aromatic polyester fibre, polyvinyl alcohol fibre having a strength of at least 15 g/d, carbon fibre or glass fibre, each cord forming an angle of from 10 to 30 degrees to the circumferential direction of the tyre, and the cords, in each breaker ply being positioned to cross the cords in an adjacent ply, and the band (10) comprises a ribbon of one or more composite cords aligned parallel to one another wound in a continuous spiral form, said composite cords having a strength of not more than 2.5 g/d at 3% extension and an extension of not more than 8% upon application of a load (strenght) of 6 g/d, and being prepared by twisting high-modulus filaments and low-modulus filaments into two cords which then are back-twisted together, and each of said cords forming an angle of 0 to 3 degrees with the circumferential direction of the tyre.

2. A radial tyre as claimed in claim 1 characterised in that the cords in said breaker have a coefficient of twist (NT), as expressed by the following equation, in the range of from 0.35 to 0.60:

$$NT = N \times (0.139 \times D/\rho)^{0.5} \times 10^{-3}$$

where N is the number of twist per 10 cm, D is one half of the total denier of the cord, and $\rho$ is the specific gravity of the fibres.

3. A radial tyre as claimed in claim 1 or 2 characterised in that said high-modulus filaments comprise an aromatic polyamide whereas said low-modulus filaments comprise nylon 66.

4. A radial tyre as claimed in claim 1, 2 or 3 characterised in that said composite cords have an extension of not more than 6.5% upon application of a load (strength) of 6 g/d.

5. A radial tyre as claimed in claim 1 characterised in that said composite cords have a strength of from 1 to 2.5 g/d at 3% extension and an extension of from 4 to 8% upon application of a load (strength) of 6 g/d.

6. A radial tyre as claimed in claim 2 characterised in that said coefficient of twist (NT) is from 0.35 to 0.50.

**Patentansprüche**

1. Ein Radialreifen mit einer Karkassenschicht (6), die eine Vielzahl von Korden aufweist, die in einer im wesentlichen radialen Richtung ausgerichtet sind und sich vom Laufflächenabschnitt (2) durch einen Seitenwandabschnitt (3) zu dem Wulstkern (5) in jedem von einem Paar von Wulstabschnitten (4) erstrecken, um die herum sie vom Inneren zum Äußeren des Reifens gefaltet oder umgeschlagen und positionsgemäß fixiert ist, einem Breaker (9), der radial außerhalb der Karkassenschicht (6) positioniert ist, und einem Band (10), das radial außerhalb des Breakers (9) und radial innerhalb der ringförmigen Lauffläche (2) positioniert ist,
dadurch **gekennzeichnet,**
daß der Breaker (9) wenigstens zwei Schnittbreakerlagen aus Korden umfaßt, die aus aromatischer Polyamidfaser, gänzlich aromatischer Polyesterfaser, Polyvinylalkoholfaser mit einer Festigkeit von wenigstens 15 g/d, Kohlenstoffaser oder Glasfaser bestehen, wobei jeder Kord einen Winkel von 10 bis 30 Grad zur Umfangsrichtung des Reifens bildet und die Korde in jeder Breakerlage so positioniert sind, daß sie die Korde in einer benachbarten Lage kreuzen, und daß das Band (10) einen Streifen aus einem oder mehreren zusammengesetzten Korden umfaßt, die parallel zueinander ausgerichtet und in einer kontinuierlichen Spiralform gewickelt sind, wobei die zusammengesetzten Korde eine Festigkeit von nicht mehr als 2,5 g/d bei 3 % Dehnung und eine Dehnung von nicht mehr als 8 % nach Aufbringung einer Last (Festigkeit) von 6 g/d aufweisen und durch Verdrehen von Hochmodulfilamenten und Niedrigmodulfilamenten in zwei Korde, die dann in entgegengesetztem Sinn miteinander verdreht werden, hergestellt werden, und wobei jeder der Korde einen Winkel von 0 bis 3 Grad mit der Umfangsrichtung des Reifens bildet.

2. Ein Radialreifen wie in Anspruch 1 beansprucht,
   dadurch **gekennzeichnet,**
   daß die Korde in dem Breaker einen Verdrehungskoeffizienten (NT), wie durch die folgende Gleichung ausgedrückt, in dem Bereich von 0,35 bis 0,60 aufweisen:

   $$NT = N \times (0{,}139 \times D/\rho)^{0.5} \times 10^{-3}$$

   wobei N die Verdrehungszahl pro 10 cm, D die Hälfte des Gesamtdenier des Kords und $\rho$ die spezifische Schwere der Fasern ist.

3. Ein Radialreifen wie in Anspruch 1 oder 2 beansprucht,
   dadurch **gekennzeichnet,**
   daß die Hochmodulfilamente aus einem aromatischen Polyamid bestehen, wohingegen die Niedrigmodulfilamente aus Nylon 66 bestehen.

4. Ein Radialreifen wie in Anspruch 1, 2 oder 3 beansprucht,
   dadurch **gekennzeichnet,**
   daß die zusammengesetzten Korde eine Dehnung von nicht mehr als 6,5 % nach Aufbringung einer Last (Festigkeit) von 6 g/d aufweisen.

5. Ein Radialreifen wie in Anspruch 1 beansprucht,
   dadurch **gekennzeichnet,**
   daß die zusammengesetzten Korde eine Festigkeit von 1 bis 2,5 g/d bei 3 % Dehnung und eine Dehnung von 4 bis 8 % nach Aufbringung einer Last (Festigkeit) von 6 g/d aufweisen.

6. Ein Radialreifen wie in Anspruch 2 beansprucht,
   dadurch **gekennzeichnet,**
   daß der Verdrehungskoeffizient (NT) zwischen 0,35 und 0,50 liegt.

**Revendications**

1. Pneumatique à carcasse radiale comprenant une couche (6) de carcasse ayant plusieurs câblés alignés en direction sensiblement radiale, allant de la partie de bande de roulement (2) dans une partie de flanc (3) jusqu'à la tringle (5) de chacune de deux parties de talon (4), la carcasse étant repliée ou retournée autour de la tringle de l'intérieur vers l'extérieur du pneumatique et étant fixée en position, une nappe-sommet (9) placée radialement à l'extérieur de la couche de carcasse (6), et une bande (10) placée radialement à l'extérieur de la nappe-sommet (9) et radialement à l'intérieur de la bande de roulement annulaire (2), caractérisé en ce que la nappe-sommet (9) comporte au moins deux nappes coupées de nappe-sommet formée de câblés contenant des fibres de polyamide aromatique, de polyester entièrement aromatique, d'alcool polyvinylique ayant une résistance mécanique d'au moins 0,15 N/d (15 g/d), de fibres de carbone ou de fibres de verre, chaque câblé faisant un angle compris entre 10 et 30° avec la direction circonférentielle du pneumatique, et les câblés, dans chaque nappe de la nappe-sommet, sont disposés afin qu'ils recoupent les câblés d'une nappe adjacente, et la bande (10) comporte un ruban d'un ou plusieurs câblés composites alignés parallèlement les uns aux autres et enroulés sous forme spiralée et continue, les câblés composites ayant une résistance mécanique qui ne dépasse pas 0,025 N/d (2,5 g/d) à un allongement de 3 % et un allongement qui ne dépasse pas 8 % lors de l'application d'une force (résistance) de 0,06 N/d (6 g/d), et étant préparés par retordage de filaments de module élevé et de filaments de faible module en deux câblés qui sont retordus en sens inverses l'un avec l'autre, chacun des câblés faisant un angle de 0 à 3° avec la direction circonférentielle du pneumatique.

2. Pneumatique à carcasse radiale selon la revendication 1, caractérisé en ce que les câblés de la nappe-sommet ont un coefficient de torsion (NT), exprimé par l'équation suivante, qui est compris entre 0,35 et 0,60 :

   $$NT = N(0{,}139.D/\rho)^{0,5}.10^{-3}$$

   N étant le nombre de torsions par fraction de 10 cm, D la moitié du denier total du câblé et $\rho$ la densité

des fibres.

3.  Pneumatique à carcasse radiale selon la revendication 1 ou 2, caractérisé en ce que les filaments de module élevé sont formés de polyamide aromatique alors que les filaments de faible module sont formés de "Nylon 66".

4.  Pneumatique à carcasse radiale selon la revendication 1, 2 ou 3, caractérisé en ce que les câblés composites ont un allongement qui ne dépasse pas 6,5 % lors de l'application d'une force (résistance) de 0,06 N/d (6 g/d).

5.  Pneumatique à carcasse radiale selon la revendication 1, caractérisé en ce que les câblés composites ont une résistance mécanique comprise entre 1 et 2,5 g/d à un allongement de 3 % et un allongement compris entre 4 et 8 % lors de l'application d'une force (résistance) de 0,06 N/d (6 g/d).

6.  Pneumatique à carcasse radiale selon la revendication 2, caractérisé en ce que le coefficient de torsion (NT) est compris entre 0,35 et 0,50.

FIG. 1

F I G .   2

F I G .   3

F I G .   4